# EUROPEAN PATENT SPECIFICATION

(11) **EP 4 352 459 B1**
(45) Date of publication and mention of the grant of the patent: **05.11.2025**
(21) Application number: 21806461.6
(22) Date of filing: 29.09.2021
(51) Int. Cl.: G01C 21/34

(54) **PRIVATE DIRECTIONS AND NAVIGATION**
PRIVATE RICHTUNGEN UND NAVIGATION
DIRECTIONS ET NAVIGATION PRIVÉES

(43) Date of publication of application: 17.04.2024
(73) Proprietor: GOOGLE LLC, Mountain View CA 94043 (US)
(72) Inventor: SHARIFI, Matthew, Mountain View, CA 94043 (US)
(74) Representative: Seymour-Pierce, Alexandra Isobel
(86) International application number: PCT/US2021/052602
(87) International publication number: WO 2023/055353

(56) References cited:
- US-A1- 2015 160 023
- US-A1- 2015 308 848

## Description

### FIELD OF THE DISCLOSURE

The present disclosure generally relates to turn by turn navigation and, more particularly, to preserving privacy during a navigation session.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Turn by turn navigation is a frequently used method for reaching a destination by driving or other modes of transportation, such as walking, cycling, public transit, etc. Currently, turn by turn navigation applications on mobile devices typically receive indications of an origin location and a destination location from a user and send the origin location and destination location to a back-end navigation server, which accesses map and traffic databases in order to generate a navigation route including turn-by-turn instructions *(i.e.,* a series of maneuvers) for traveling from the origin location to the destination location. The navigation application receives the generated route from the back-end navigation server and provides it to the user. Additionally, navigation applications may periodically or continuously capture a current location associated with the user in order to update the navigation route to match the user's current position, *i.e.,* by sending the user's current location to the back-end navigation server, receiving an updated navigation route from the back-end navigation server, and providing the updated navigation route to the user. However, in some instances, individuals who use navigation applications may prefer to keep their origin location, their destination location, and/or their current location private.

US 2015/308848 A1 discloses a vehicle information providing device which provides route information to vehicles. The vehicle information providing device has a history information accumulation unit that sequentially acquires at least one of driving location information, power consumption information and charging location information from vehicle-mounted devices of a plurality of vehicle, and accumulates this as driving history information. The vehicle information providing device has a presentation information provision unit that provides information regarding a presentation route in which the information regarding the presentation route is presented in a form such that routes in a vicinity of the private location cannot be identified, when the presentation route is determined to include at least one private location.

US 2015/160023 A1 discloses providing personalized traffic alerts. In general, one aspect can be a method that includes identifying, at a computing device, an area of interest associated with information request. The method also includes submitting to a remote computing system a request associated with the area of interest that does not identify the area of interest. The method further includes receiving, in response to the submitted request, a result corresponding to a super-area that is larger than, but includes, the area of interest. The method additionally includes identifying information within the result corresponding to the area of interest.

### SUMMARY

Aspects of the invention are set out in appended claims 1, 13 and 14. Optional features are set out in the dependent claims appended thereto.

One example embodiment of the techniques of this disclosure is a computer-implemented method in a mobile computing device, comprising: receiving, by one or more processors, an indication of a precise origin location and a precise destination location via a navigation application operating on the mobile computing device; generating, by the one or more processors, via the navigation application, a private navigation route based on the indication of the precise origin location and the precise destination location, by: generating, by the one or more processors, an indication of a coarse origin region including the precise origin location, and an indication of a coarse destination region including the precise destination location; transmitting, by the one or more processors, the indication of the coarse origin region and the indication of the coarse destination region to an external navigation server; receiving, by the one or more processors, from the external navigation server: (i) a coarse navigation route from the coarse origin region to the coarse destination region, (ii) navigation data associated with the coarse origin region, and (iii) navigation data associated with the coarse destination region; and generating, by the one or more processors, the private navigation route for the user based on: (i) the coarse navigation route from the coarse origin region to the coarse destination region, (ii) the navigation data associated with the coarse origin region, (iii) the navigation data associated with the coarse destination region; and providing, by the one or more processors, the private navigation route to the user.

Another example embodiment of the techniques of this disclosure is a mobile computing device, comprising: one or more processors; and a computer-readable memory coupled to the one or more processors and storing instructions thereon that, when executed by the one or more processors, cause the mobile computing device to: receive an indication of a precise origin location and a precise destination location via a navigation application operating on the mobile computing device; generate, via the navigation application, a private navigation route based on the indication of the precise origin location and the precise destination location, by: generating an indication of a coarse origin region including the precise origin location, and an indication of a coarse destination region including the precise destination location; transmitting the indication of the coarse origin region and the indication of the coarse destination region to an external navigation server; receiving, from the external navigation server: (i) a coarse navigation route from the coarse origin region to the coarse destination region, (ii) navigation data associated with the coarse origin region, and (iii) navigation data associated with the coarse destination region; and generate the private navigation route for the user based on: (i) the coarse navigation route from the coarse origin region to the coarse destination region, (ii) the navigation data associated with the coarse origin region, (iii) the navigation data associated with the coarse destination region; and provide the private navigation route to the user.

Yet another example embodiment of the techniques of this disclosure is a computer-readable memory coupled to one or more processors and storing instructions thereon that, when executed by the one or more processors, cause the one or more processors to: receive an indication of a precise origin location and a precise destination location via a navigation application operating on the mobile computing device; generate, via the navigation application, a private navigation route based on the indication of the precise origin location and the precise destination location, by: generating an indication of a coarse origin region including the precise origin location, and an indication of a coarse destination region including the precise destination location; transmitting the indication of the coarse origin region and the indication of the coarse destination region to an external navigation server; receiving, from the external navigation server: (i) a coarse navigation route from the coarse origin region to the coarse destination region, (ii) navigation data associated with the coarse origin region, and (iii) navigation data associated with the coarse destination region; and generate the private navigation route for the user based on: (i) the coarse navigation route from the coarse origin region to the coarse destination region, (ii) the navigation data associated with the coarse origin region, (iii) the navigation data associated with the coarse destination region; and provide the private navigation route to the user.

### BRIEF DESCRIPTION OF THE DRAWINGS

Fig. 1 illustrates an example environment in which the techniques of the present disclosure can be used for preserving privacy during a navigation session;
Fig. 2 is a block diagram of an example electronic device and an example head unit that can operate in the system of Fig. 1;
Fig. 3A illustrates an example precise origin location and an example precise destination location.
Fig. 3B illustrates an example coarse origin region containing the precise origin location of Fig. 3A, and an example coarse destination region containing the precise destination location of Fig. 3A.
Fig. 3C illustrates an example coarse navigation route from the coarse origin region of Fig. 3B to the coarse destination region of Fig. 3B.
Fig. 3D illustrates an example local origin route from the precise origin location of Fig. 3A to a starting point of the coarse navigation route of Fig. 3C, and an example local destination route from an end point of the coarse navigation route of Fig. 3C to the precise destination location of Fig. 3A.
Fig. 4 is a flow diagram of an example method for preserving privacy during a navigation session, which can be implemented in a computing device.

### DETAILED DESCRIPTION

### Overview

A navigation application that includes a private mode is provided, in which precise locations associated with a navigation route are never transmitted to any external servers, in order to ensure that the user's current location, and origins and destinations of their navigation routes, are only stored locally on the user's device, thereby giving the user greater control and privacy over their sensitive data.

When the navigation application is operating in the private mode, the user may provide an origin location and a destination location to the navigation application locally, via a mobile device on which the navigation application is operating. The navigation application may generate coarse versions of the origin location and the destination location and may transmit these coarse versions of the origin location and the destination location to a back-end server. For instance, the precise origin location and destination locations may be specific addresses, and the coarse versions of the origin location and destination location may be, e.g., regions (such as a grid cell on a digital map, city boundaries, county boundaries, etc.) including the precise origin location or the precise destination location respectively, center points of the cities where the precise origin location or precise destination location are respectively located, randomized points within a given radius of the precise origin location or precise destination location respectively, etc.

The back-end server may respond with a coarse navigation route that connects the two coarse locations, along with navigation data and/or map data associated with the two coarse locations. The navigation application may then use the navigation data and/or map data associated with the coarse version of the origin location to locally generate a route that connects the precise origin location to the starting point of the coarse navigation route. Similarly, the navigation application may use the navigation data and/or map data associated with the coarse version of the destination location to locally generate a route that connects the end point of the coarse navigation route to the precise destination location.

Advantageously, compared to typical navigation applications, operating a navigation application in the private mode discussed above improves user privacy, as the user's current location, origin location, and destination location are used locally by the user's device but are never externally transmitted. Accordingly, the back-end server never receives an indication of the user's currently location or where exactly a user travels, e.g. if they are visiting a particular address, such as a specific doctor's office. That is, the back-end server only receives an indication of the coarse area to which the user is navigating. The methods described herein allow the generation of a precise navigation route that avoids having to send sensitive user location data to the back-end server. As discussed, this is achieved by transmitting indications of a coarse origin region and a coarse destination region to the back-end server, which then generates a coarse navigation route between the coarse origin region and the coarse destination region. To avoid requiring the back-end server to know the precise origin and precise destination for the complete navigation route, the back-end server also provides navigation data associated with the coarse origin region and the coarse destination region to the mobile computing device such that the mobile computing device can generate the necessary sub-sections of the navigation route locally to connect the precise origin location and the precise destination location to the coarse origin region and coarse destination region respectively. In other words, the mobile computing device may generate sub-sections of the navigation route locally to connect the precise origin location to a start point of the coarse navigation route, and to connect an end point of the coarse navigation route to the precise destination location.

Such a method provides many benefits in addition to improving user privacy. As the back-end server generates at least some of the complete navigation route (i.e. the course navigation route), the navigation route is improved compared to a complete locally-generated route as it is generated at least partly based on up-to-date navigation data (e.g. traffic data). Further, as the back-end server generates the navigation route based on a coarse origin region and a coarse destination region, the coarse navigation route may be generated and provided to the mobile computing device more quickly as the start point and end point of the coarse navigation route may be previously-computed or otherwise predetermined locations for the corresponding coarse areas. As such, the back-end server may generate and return the coarse navigation route to the mobile computing device more quickly as it may not be necessary to re-compute a coarse navigation route for each new request, thereby increasing the speed of generating the navigation route as a whole.

### Example computing environment

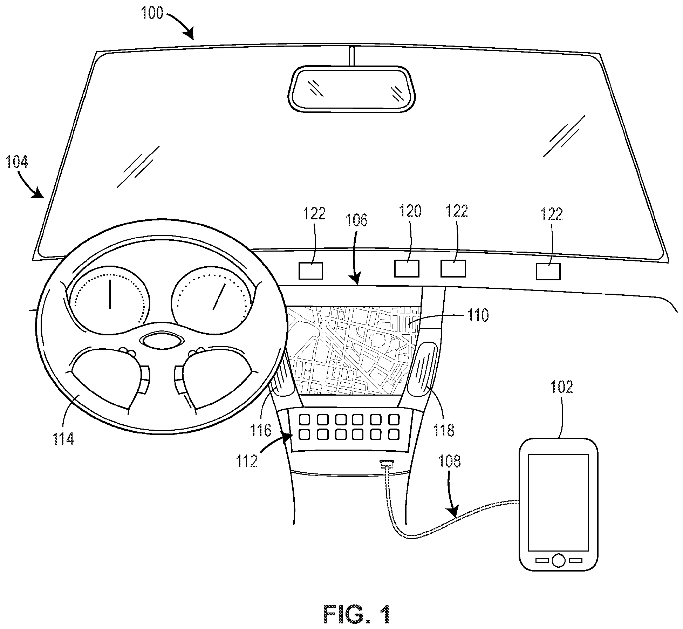

Referring to Fig. 1, an example environment 100 in which the techniques outlined above can be implemented includes an electronic device 102 and a vehicle 104 with a head unit 106. The electronic device 102 (also called a "mobile computing device" or a "mobile device" herein) may be a smart phone, tablet computer, wearable computer, etc. The electronic device 102 communicates with the head unit 106 of the vehicle 104 via a communication link 108, which may be wired (e.g., Universal Serial Bus (USB)) or wireless (e.g., Bluetooth, Wi-Fi Direct). The electronic device 102 also can communicate with various content providers, servers, etc. via a wireless communication network.

In operation, the electronic device 102 provides the head unit 106 with information related to navigation, which may include digital map images, text, and audio. The head unit 106 displays this information via a display 110. The display 110 in some implementations is a touchscreen and includes a software keyboard for entering text input, which may include the name or address of a destination, point of origin, etc. Another type of the display 110 can be as a relatively sophisticated screen provided along with a non-touch input device, such as a rotary controller, for example, or a separate touch pad. In general, the display 110 need not be capable of displaying both text and images. A head unit in another vehicle can include, for example, a simple display only capable of displaying alphanumeric characters on one or several lines.

The head unit 106 can include hardware input controls such as buttons, knobs, etc. These controls can be disposed on the head unit 106 or elsewhere in the vehicle 104. For example, the vehicle 104 in Fig. 1 includes navigation controls 112 on the head unit 106 as well as steering wheel controls 114 communicatively coupled to the head unit 106. The controls 112 and 114 can be mapped to a variety of navigation control functions on the electronic device 102. The controls 112 and 114 in some implementations also can be used for entering alphanumeric characters.

The vehicle 104 can also include audio input and output components, such as a microphone 116 and a speaker 118. The microphone 116 may be configured to capture voice input from a user, while the speaker 118 may be configured to communicate navigation-related information with the user. Similar to the hardware controls 112 and 114, the microphone 116 and speaker 118 can be disposed directly on the head unit 106 or elsewhere in the vehicle 104. Additionally, the vehicle 104 can include other appropriate sensors 120, such as, for example, image sensors, which can also be disposed directly on the head unit 106 or elsewhere in the vehicle 104, and which may be configured to capture other types of input from the user (e.g., gesture commands). The vehicle 104 may also include one or more internal light indicators 122.

Of course, in some embodiments, the electronic device 102 may include some or all of the features of the head unit 106. That is, the electronic device 102 may include a display, a keyboard, hardware input controls such as buttons, knobs, etc., navigation controls, audio input and output components, various sensors, and/or lights, etc., such as those described with respect to the head unit 106. Moreover, in some embodiments, the electronic device 102 may perform some or all of the functions of the head unit 106, *e.g.,* communicating/displaying information related to navigation, etc. Accordingly, in some embodiments an electronic device such as electronic device 102 may replace the head unit 106 described herein, *i.e.,* some embodiments may not include a head unit at all.

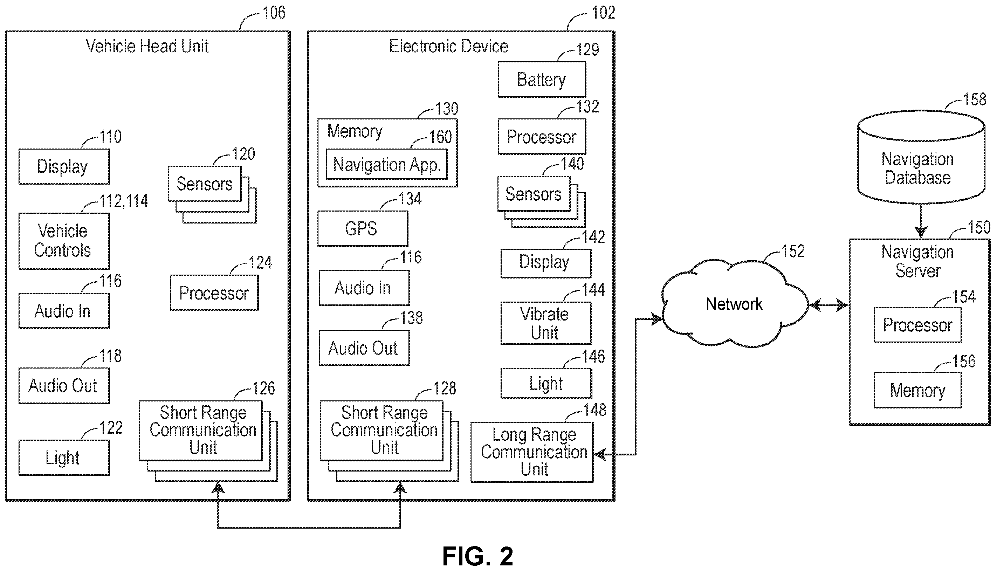

An example implementation of the electronic device 102 and head unit 106 is illustrated with reference to Fig. 2. As discussed above, the head unit 106 includes a display 110, hardware controls 112, 114, an audio input unit 116, and an audio output unit 118, one or more sensors 120, and an internal light 122. The head unit 106 may also include a processor 124 and one or several short-range communication units 126.

The set of sensors 120 can include, for example, a global positioning system (GPS) module to determine the current position of the vehicle in which the head unit 106 is installed, an inertial measurement unit (IMU) to measure the speed, acceleration, and current orientation of the vehicle, a barometer to determine the altitude of the vehicle, an image sensor configured to recognize responsive gestures made by a vehicle operator, etc. Although Fig. 2 depicts the set of sensors 120 inside the head unit 106, it is noted that the sensors 120 need not be integral components of the head unit 106. Rather, a vehicle can include any number of sensors in various locations, and the head unit 14 can receive data from these sensors during operation. Moreover, some or all of the sensors may be disposed at electronic device 102, or otherwise communicatively connected to the electronic device 102.

Depending on the implementation, the processor 124 can be a general-purpose processor that executes instructions stored on a computer-reader memory (not shown) or an application-specific integrated circuit (ASIC) that implements the functionality of the head unit 106. In any case, the processor 124 can operate to format, send, receive and/or process communication between the head unit 106 to the electronic device 102, display map images and/or notifications via the display 110, play audio notifications/communications via the audio output 118, etc.

A short-range communication unit 126 allows the head unit 106 to communicate with the electronic device 102. The short-range communication unit 126 may support wired or wireless communications, such as USB, Bluetooth, Wi-Fi Direct, Near Field Communication (NFC), etc. Similarly, the electronic device 102 can include a short-range communication unit 128 for communicating with the head unit 106. Similar to the short-range communication unit 126, the short-range communication unit 128 can support one or more communication schemes such as USB, Bluetooth, Wi-Fi Direct, etc.

The electronic device 102 can also include a memory 130, one or more processors 132, a positioning module such as a GPS unit 134, an audio input unit 136, and an audio output unit 138, one or more sensors 140, a display 142, a vibrate unit 144, and a light source 146 *(e.g.,* an LED). The memory 130, one or more processors 132, positioning module such as a GPS unit 134, audio input unit 136, and audio output unit 138, one or more sensors 140, display 142, vibrate unit 144, and light source 146 *(e.g.,* an LED) may operate similarly to analogous components described as part of the head unit 106, and may in some instances be included only in the electronic device 102. Furthermore, the electronic device 102 can include a long-range communication unit 148 to, *e.g*., communicate with another electronic device 102, and/or transmit data to and receive data from a navigation server 150 via, *e.g.,* a 3G cellular network, a 4G cellular network, an LTE cellular network, a Wi-Fi network, or any other suitable network 152. The navigation server 150 may include a processor 154 and a memory 156, and may be configured to access navigation-related data from one or more navigation databases 158.

Furthermore, the memory 130 can store instructions of a navigation application 160. The navigation application 160 can include compiled instructions and/or instructions in any suitable programmable language interpretable at runtime, and executes on the one or more processors 132. Generally, the navigation application generates, or receives from the navigation server 150, a route directing a user from an origin location to a destination location selected by the user. The route may be a vehicle route (*e.g.*, for a user traveling in an automobile, boat, motorcycle, snowmobile, all-terrain vehicle, etc.), or a running, walking, or bicycling route. As one example, the route can include a sequence of steps, each describing a route segment (*e.g.*, name or number of the road, distance, travel time, speed limit) and a maneuver (*e.g*., left turn, merge right, proceed straight) to access the next route segment. The navigation application 160 may also provide information about points of interest (POls) along the route, as well as other information relevant to the user.

Additionally, the navigation application 160 may perform one or more functions related to the navigation route. For instance, these functions may include generating audio signals (*e.g.*, via audio output 118 or 138) associated with the navigation route. Other functions related to the navigation route may include, for instance, displaying a map display associated with the navigation route and/or updating a graphical indication of a location associated with the mobile computing device on the map display associated with the navigation route (*e.g.*, via a user interface display 110 or 142). Moreover, functions related to the navigation route may include, for example, refreshing sensor data indicative of the location associated with the mobile computing device (*e.g*., via the GPS 134). Furthermore, functions related to the navigation route may include, for instance, requesting updated traffic data associated with the navigation route (*e.g*., via a network, such as the network 152), and/or modifying the navigation route based on the updated traffic data.

In some examples, the navigation application 160 may operate in a private mode. In some examples, the navigation application 160 may operate in the private mode by default, for all routes. Additionally, in some examples, the navigation application 160 may switch between a private mode and a "normal mode" based on input received from a user. For instance, the navigation application 160 may receive input from the user indicating that the user prefers to operate the navigation application 160 in the private mode for all routes, or only for particular routes. Additionally, in some examples, the navigation application 160 my receive input from the user indicating that the user prefers to operate the navigation application 160 in the private mode for a particular origin location or destination location, *e.g*., such as when the origin location or the destination location is the user's home address. Generally speaking, when operating in the private mode, the navigation application 160 may generate a route for a user based on a precise origin location and a precise destination location provided by the user without revealing the precise origin location or the precise destination location to the external navigation server 150 (or any other external computing device). Instead, the navigation application 160 may locally generate coarse origin and destination regions and provide those to the external navigation server 150, which may in turn provide a coarse navigation route between the coarse origin region and coarse destination region along with generalized navigation data related to the coarse origin region and the coarse destination region, which the navigation application may use to locally generate a private navigation route.

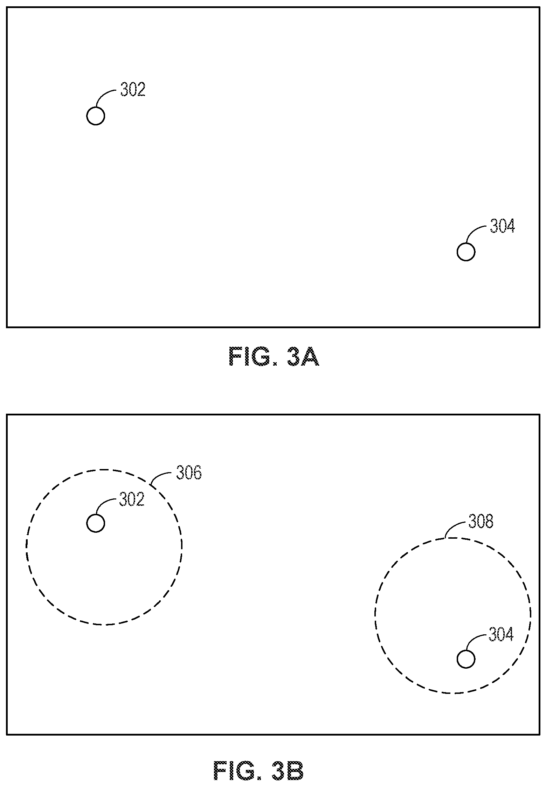

In particular, after receiving (*e.g.,* from a user) or otherwise obtaining (*e.g.,* based on a sensor indication of a current location) indications of a precise origin location and a precise destination location, the navigation application 160 may generate a coarse origin region including the precise origin location and a coarse destination region including the precise destination location. For example, if the precise origin or destination location is a particular address on a particular street, the coarse origin or destination region containing the precise origin or destination location may be, in a city setting, a several-block region in which the particular address is located. In a more rural setting, the coarse origin or destination region containing the precise origin or destination location may be a larger region. In particular, the coarse origin or destination region for a particular precise origin or destination location may be a region containing a number of possible addresses greater than a threshold number, such that providing the coarse origin or destination region to the external navigation server 150 does not reveal the precise origin or destination location (or otherwise narrow the precise origin or destination location to a very small number of possibilities). For example, Fig. 3A illustrates an example precise origin location 302 and an example precise destination location 304. Furthermore, Fig. 3B illustrates an example coarse origin region 306 containing the precise origin location 302 of Fig. 3A, and an example coarse destination region 308 containing the precise destination location 304 of Fig. 3A.

Referring back to Fig. 2, the navigation application 160 may locally generate the coarse origin or destination region based on the precise origin or destination location by accessing a cached place database stored on the memory 130 that maps place names or place IDs to particular S2 cells where the places associated with the names or IDs are located. The navigation application 160 may then use the S2 cell where the place associated with the name or ID is located to generate the coarse origin region or the coarse destination region. For instance, in some examples, the S2 level may be fixed, while in other examples, the S2 level may be a variable level which contains a minimum number of unique places (*e.g*., at least 100 different addresses) in order to ensure that the coarse origin region or coarse destination region is sufficiently anonymized.

In particular, the navigation application 160 may receive precise origin and destination locations as user input in unstructured strings, either in the form of a place name (*e.g*., "McDonalds Zurich"), or in the form of an address (*e.g*., "123 Main Street, Palo Alto), and may access the cached place database stored on the memory 130 to determine locations associated with place names provided by the user. For instance, the navigation application 160 may periodically (*i.e.,* not necessarily responsive to requests for routes) download listings of addresses and place names in the user's vicinity (*e.g.*, at the state, city, county, etc., level) and their associated S2 cells from the external navigation server 150 based on the user's current location and store these listings in the cached place database on the memory 130. The navigation application 160 may also store previously visited places in the cached place database on the memory 130. If the navigation application 160 is unable to locate the place name or ID in the cached place database on the memory 130, the navigation application 160 may prompt the user to add additional input in order to confirm a city, town, or zip code associated with the precise origin or destination location. The navigation application 160 may then download additional listings of addresses and place names and their associated S2 cells from the external navigation server 150 based on the provided additional information in order to determine an S2 cell associated with the place name or address entered by the user.

Accordingly, once the navigation application 160 has generated a coarse origin region based on the S2 cell associated with the precise origin location, and a coarse destination region based on the S2 cell associated with the precise destination location, the navigation application 160 may transmit indications of the coarse origin region and the coarse destination region to the external navigation server 150. Importantly, the navigation application 160 may send indications of the coarse origin region and coarse destination region to the navigation server 150 without sending the precise origin location or the precise destination location to the navigation server.

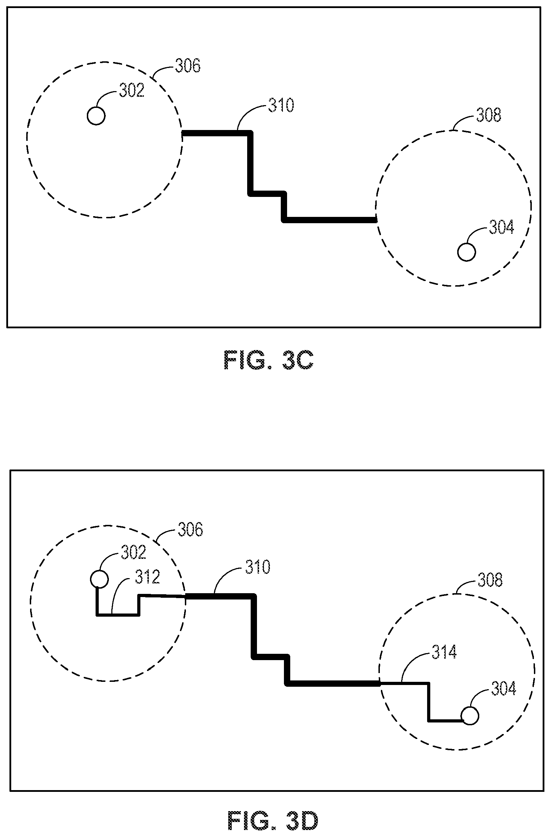

The navigation server 150 may use the coarse origin region and the coarse destination region to generate a coarse navigation route from the coarse origin region to the coarse destination region, and may send this coarse navigation route to navigation application 160. For instance, Fig. 3C illustrates an example coarse navigation route 310 from the coarse origin region 306 of Fig. 3B to the coarse destination region 308 of Fig. 3B. Referring back to Fig. 2, the coarse navigation route generated by the navigation server 150 may be any of a number of different possible routes connecting the coarse origin region to the coarse destination region. For instance, in some examples, the navigation server 150 may generate the coarse navigation route from a center point or location of the coarse origin region to a center point or location of the coarse destination region. In some examples, the navigation server 150 may generate the coarse navigation route from a point on an edge or boundary of the coarse origin region (*e.g.*, a point on the edge or boundary of the coarse origin region that is closest to the boundary of the coarse destination region) to a point on an edge or boundary of the coarse destination region (*e.g*., a point on the edge or boundary of the coarse destination region that is closest to the boundary of the coarse origin region), as shown at Fig. 3C. In some examples, the navigation server 150 may generate the coarse navigation route from a frequently visited point or location of the coarse origin region to a frequently visited point or location of the coarse destination region. For instance, in some examples, the navigation server 150 may generate multiple possible coarse navigation routes from a plurality of frequently visited points or locations of the coarse origin region (e.g., the top 3, top 5, top 10, most-visited points or locations, etc.) to a plurality of frequently visited points or locations (e.g., the top 3, top 5, top 10, most-visited points or locations, etc.) of the coarse destination region. Furthermore, in some examples, the navigation server 150 may generate the coarse navigation route from a randomized point or location of the coarse origin region to a randomized point or location of the coarse destination region. In some examples, particularly for larger coarse origin regions or coarse destination regions, the navigation server 150 may generate multiple possible coarse navigation routes, with each route from a randomized point or location of the coarse origin region to a different randomized point or location of the coarse destination region.

Moreover, in some examples, the navigation server 150 may generate the coarse navigation route based on historical routes between the coarse origin region and the coarse destination region, *e*.*g*., based on data from routes generated by or taken by other users between the two regions stored in the navigation database 158. In some examples, this may advantageously lead to improved efficiency, as the same coarse navigation route may be reused for multiple users in some cases, thereby avoiding regeneration of a coarse navigation route for each new request. For instance, in some examples, the navigation server 150 may access a database including coarse navigation routes between various different coarse regions, and may pull an existing coarse navigation route between two coarse regions rather than generating a completely new coarse navigation route each time a user is navigating between the same two regions. In this way, the computing time and processing power required for the navigation server 150 to generate and send the coarse navigation route to the navigation application 160 after receiving the coarse origin region and coarse destination region may be greatly reduced.

Additionally, the external navigation server 150 may generate navigation data associated with the coarse origin region and the coarse destination region, and may send this navigation data to the navigation application 160 as well. For instance, this navigation data may include street level road information and map information associated with the coarse origin and destination regions, as well as data related to weather, traffic, or other conditions in the coarse origin and destination regions. To the extent that weather, traffic, or other conditions change the coarse navigation route and/or the navigation data associated with the coarse origin and destination regions, the external navigation server 150 may periodically send an updated coarse navigation route or updated navigation data to the navigation application 160.

When the navigation application 160 receives the coarse navigation route connecting the coarse origin region to the coarse destination region, and the navigation data associated with the coarse origin region and the coarse destination regions, the navigation application 160 may generate a private navigation route. In particular, the navigation application 160 may use the navigation data associated with the coarse origin region to locally generate, at the mobile computing device 102, a local origin route sub-section from the precise origin location to a starting point of the coarse navigation route. Similarly, the navigation application 160 may use the navigation data associated with the coarse destination region to locally generate, at the mobile computing device 102, a local destination route sub-section from an end point of the coarse navigation route to the precise destination location.

For instance, as discussed above, the external navigation server 150 may send navigation data to the navigation application for the coarse origin and destination regions, including street level road information and map information associated with the coarse origin and destination regions, as well as data related to weather, traffic, or other conditions in each coarse region. The navigation data sent by the external navigation server 150 to the navigation application 160 may further include a set of locations in the coarse region and weights for traversing from one location to the next based on distance, traffic, weather, etc. In an example, the navigation application 160 may select respective routes for navigating from the precise origin location to the starting point of the coarse navigation route (*i.e.,* the local origin route sub-section) and from the end point of the coarse navigation route to the precise destination location (*i.e.,* the local destination route sub-section) using a pathfinding algorithm, where each road segment is assigned a weight corresponding to the overall score for the road segment. In some implementations, the navigation application 160 may traverse each path or candidate route from the starting location to the destination location using the road segments in the geographic area and their corresponding weights to identify a path or route having the lowest combined weight. In other implementations, the navigation application 160 may traverse each path or candidate route from the starting location to the destination location using the road segments in the geographic area and their corresponding weights to identify a threshold number of paths or routes (e.g., five) having the lowest combined weights for presenting the identified routes in a ranked order according to the combined weights.

For example, beginning at the starting location each of the road segments in the geographic area may be included in a set of candidate road segments. The navigation application 160 may identify a road segment having the lowest weight (e.g., having the lowest overall score) which is connected to the starting location and may remove the identified road segment from the set. Next, the navigation application 160 may identify a road segment remaining in the set having the lowest weight which is connected to the previously identified road segment and remove the identified road segment from the set. This process may be repeated until the destination location *(i.e.,* the starting point of the coarse navigation route for the local origin route sub-section, or the precise destination location for the local destination route sub-section) is reached. When the destination location is reached, the navigation application 160 may identify the set of identified road segments as a candidate route.

This process may then be repeated for road segments which were not selected in the first iteration. In a second iteration, the navigation application 160 may identify a second candidate route including a second set of road segments for traversing from the starting location to the destination location. After the navigation application 160 has selected each of the road segments the process may be completed. The navigation application 160 may then compare the candidate routes and select the candidate route having the lowest combined weight as the local origin route sub-section, or the local destination route sub-section, respectively.

In any case, once the navigation application generates the local origin route sub-section and the local destination route sub-section, the navigation application 160 may then locally generate, at the mobile computing device 102, the private navigation route from the precise origin location to the precise destination location by connecting the local origin route sub-section to the coarse navigation route, and in turn connecting the coarse navigation route to the local destination route sub-section. For example, Fig. 3D illustrates an example local origin route 312 from the precise origin location 302 of Fig. 3A to a starting point of the coarse navigation route 310 of Fig. 3C, and an example local destination route 314 from an end point of the coarse navigation route 310 of Fig. 3C to the precise destination location 302 of Fig. 3A. Referring back to Fig. 2, to the extent that the external navigation server 150 provides multiple possible coarse navigation routes to the navigation application 160, the navigation application 160 may use the coarse navigation route with the shortest distance between its starting point and the precise origin location, and/or the shortest distance between its end point and the precise destination location, in order to generate the private navigation route.

The navigation application 160 may then provide the private navigation route to the user, *e.g.,* by generating audio signals (*e.g.,* via audio output 118 or 138) associated with the private navigation route, or by displaying a map display associated with the private navigation route (*e.g*., via a user interface display 110 or 142). In some examples, the navigation application 160 may modify the map display associated with the private navigation route in order to illustrate the coarse origin region and/or coarse destination region, and/or in order to illustrate the portions of the route that were generated locally at the mobile computing device 102 (*i.e.,* the local origin route sub-section and local destination route sub-section) compared to the portions of the route that were generated by the external navigation server 150 (*e.g.,* the coarse navigation route). For instance, the navigation application 160 may cause the user interface display 110 or 142 to highlight, shade, or otherwise texture the portions of the route that were generated locally at the mobile computing device 102 differently than the portions of the route generated by the external navigation server 150.

As the external navigation server 150 sends an updated coarse navigation route or updated navigation data to the navigation application 160, the navigation application 160 may update the private navigation route and in turn update the audio signals or map display provided to the user.

While the discussion above generally refers to generating the private navigation route without revealing either of the precise origin location or the precise destination location to the external navigation server 150, in some examples, the navigation application 160 may generate a partially private navigation route in a similar manner, *i.e.,* by revealing the precise origin location to the external navigation server 150 but not revealing the precise destination location to the external navigation server, or vice versa, *e.g*., based on a request from a user to privatize only a particular portion of his or her navigation route. For instance, if the navigation application 160 provides the precise origin location to the external navigation server 150 but provides a coarse destination region instead of the precise destination location, the external navigation server 150 may generate a coarse navigation route connecting the precise origin location to the coarse destination region, and send the coarse navigation route to the navigation application 160. The navigation application 160 may then locally generate a local destination route sub-section from the end point of the coarse navigation route to the precise destination location, and may generate the private navigation route by connecting the coarse navigation route to the local destination route sub-section. Beneficially, this approach provides a flexible method of generating a navigation route without providing both precise origin and precise destination locations.

### Example method for preserving privacy during a navigation session

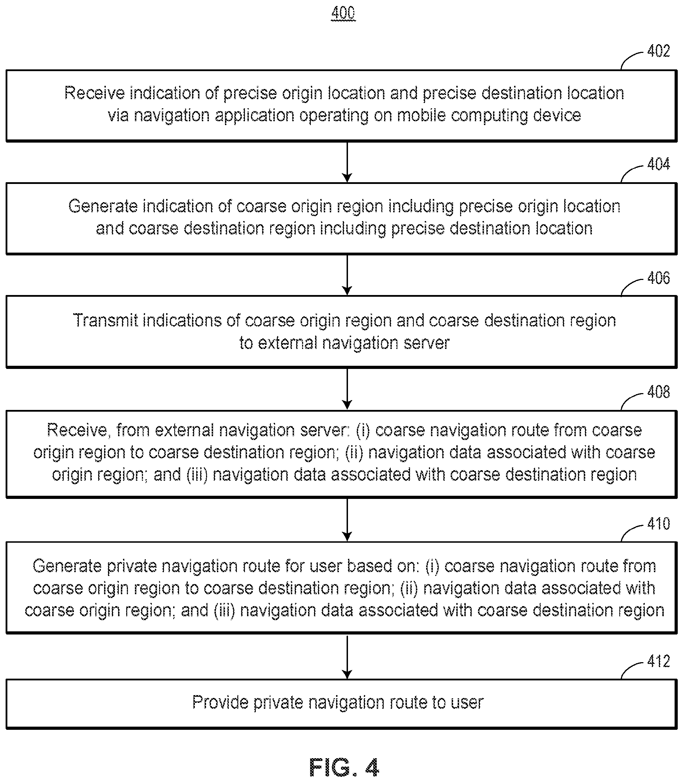

Fig. 4 illustrates a flow diagram of an example method 400 for preserving privacy during a navigation session. The method may be implemented in a set of instructions stored on a computer-readable memory (*e.g*., memory 130) and executable at one or more processors (*e.g.,* processors 132) of a mobile computing device (*e.g.,* the electronic device 102). For example, the method can be implemented by a navigation application (*e.g*., the navigation application 160) executing or operating on the mobile computing device (*e.g*., electronic device 102).

At block 402, an indication of a precise origin location and a precise destination location may be received or otherwise obtained via a navigation application operating on a mobile computing device. In some examples, a user may provide the precise origin location and/or the precise destination location for the route. In some examples, the mobile computing device may determine the precise origin location or the precise destination location for a route based on a current location associated with the mobile computing device.

In some examples, the method 400 may include receiving an indication of a request from a user to operate in a private navigation mode. The navigation application may generate a private navigation route (in some cases, in response to the request from the user to operate in the private navigation mode) based on the indication of the precise origin location and the precise destination location.

At block 404, the navigation application may generate an indication of a coarse origin region including the precise origin location, and an indication of a coarse destination region including the precise destination location. In some examples, the navigation application may generate the coarse origin region by comparing the precise origin location to a cached place database stored locally on the mobile computing device to determine the coarse origin region, of a plurality of coarse regions stored on the cached place database, in which the precise origin location is located. Similarly, in some examples, the navigation application may generate the coarse destination region by comparing the precise destination location to a cached place database stored locally on the mobile computing device to determine the coarse destination region, of a plurality of coarse regions stored on the cached place database, in which the precise destination location is located. Furthermore, in some examples, the navigation application may prompt the user to provide a state, city, county, zip code, etc., associated with the respective precise origin location or precise destination location in order to generate the coarse origin region or the coarse destination region.

At block 406, the navigation application may transmit the indication of the coarse origin region and the indication of the coarse destination region to an external navigation server. For instance, the external navigation server may generate a coarse navigation route connecting the coarse origin region and the coarse destination region. For example, the external navigation server may generate the coarse navigation route connecting the coarse origin region and the coarse destination region using a randomly-selected point or location within the coarse origin region as the origin for the coarse navigation route, and/or using a randomly-selected point or location within the coarse destination region as the destination for the coarse navigation route. As another example, the external navigation server may generate the coarse navigation route connecting the coarse origin region and the coarse destination region using a center point or location of the coarse origin region as the origin for the coarse navigation route and/or using a center point or location of the coarse destination region as the destination for the coarse navigation route. As still another example, the external navigation server may generate the coarse navigation route connecting the coarse origin region and the coarse destination region using an edge point of a boundary of the coarse origin region that is closest to the coarse destination region as the origin for the coarse navigation route and/or using an edge point of a boundary of the coarse destination region that is closest to the coarse origin region as the destination for the coarse navigation route. Additionally, as another example, the external navigation server may generate the coarse navigation route connecting the coarse origin region and the coarse destination region using a frequently-requested location within the coarse origin region as the origin for the coarse navigation route and/or using a frequently requested location within the coarse destination region as the destination for the coarse navigation route. In some examples, the external navigation server may generate the coarse navigation route at least partially based on one or more historical navigation routes generated by the navigation server between the coarse origin region and the coarse destination region.

At block 408, the navigation application may receive, from the external navigation server: (i) a coarse navigation route from the coarse origin region to the coarse destination region, (ii) navigation data associated with the coarse origin region, and (iii) navigation data associated with the coarse destination region.

At block 410, the navigation application may generate the private navigation route for the user based on: (i) the coarse navigation route from the coarse origin region to the coarse destination region, (ii) the navigation data associated with the coarse origin region, (iii) the navigation data associated with the coarse destination region. For instance, in some examples, the navigation application may generate a local origin route from the precise origin location to a starting point of the coarse navigation route based on the navigation data associated with the coarse origin region. Similarly, in some examples, the navigation application may generate a local destination route from an ending point of the coarse navigation route to the precise destination location based on the navigation data associated with the coarse destination region. The navigation application may then generate the private navigation route by connecting the local origin route, the coarse navigation route, and the local destination route as sub-sections of the private navigation route.

At block 412, the private navigation route may be provided to the user. In some examples, the private navigation route may be provided to the user audibly (*e*.*g*., by verbally indicating maneuvers to be performed by the user via one or more speakers of the mobile computing device) and/or visually (*e.g*., by displaying indications of maneuvers to be performed via a graphical user interface of the mobile computing device). In some examples, providing the private navigation route to the user may include providing an indication of the coarse origin region and the coarse destination region to the user. For instance, the graphical user interface of the mobile computing device may display a map and may display the private navigation route overlaid over the map. In some examples, the graphical user interface of the mobile computing device may display the coarse origin region and/or the coarse destination region overlaid over the map as well (*e.g.,* by displaying an outline of the coarse origin region and/or the coarse destination region, by displaying the coarse origin region and/or the coarse destination region highlighted or shaded in a particular color, etc.). Moreover, in some example, the graphical user interface of the mobile computing device may also display an indication of which sub-section(s) of the private navigation route were generated locally at the mobile computing device (*e.g.*, the local origin route and/or the local destination route) and which sub-section(s) of the private navigation route were generated by the external navigation server (*e.g*., the coarse navigation route), *e.g.,* by displaying the sub-section(s) of the private navigation route that were generated locally as highlighted or shaded in a particular color, and displaying the sub-section(s) of the private navigation route that were generated by the external navigation server as highlighted or shaded in a particular color.

### Additional considerations

The following additional considerations apply to the foregoing discussion. Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter of the present disclosure.

Additionally, certain embodiments are described herein as including logic or a number of components, modules, or mechanisms. Modules may constitute either software modules (*e.g.*, code stored on a machine-readable medium) or hardware modules. A hardware module is tangible unit capable of performing certain operations and may be configured or arranged in a certain manner. In example embodiments, one or more computer systems (*e.g*., a standalone, client or server computer system) or one or more hardware modules of a computer system (*e.g*., a processor or a group of processors) may be configured by software (*e.g*., an application or application portion) as a hardware module that operates to perform certain operations as described herein.

A hardware module may comprise dedicated circuitry or logic that is permanently configured (*e.g.*, as a special-purpose processor, such as a field programmable gate array (FPGA) or an application-specific integrated circuit (ASIC)) to perform certain operations. A hardware module may also comprise programmable logic or circuitry (*e.g*., as encompassed within a general-purpose processor or other programmable processor) that is temporarily configured by software to perform certain operations. It will be appreciated that the decision to implement a hardware module in dedicated and permanently configured circuitry or in temporarily configured circuitry (*e.g*., configured by software) may be driven by cost and time considerations.

Accordingly, the term hardware should be understood to encompass a tangible entity, be that an entity that is physically constructed, permanently configured (e.g., hardwired), or temporarily configured (*e.g*., programmed) to operate in a certain manner or to perform certain operations described herein. Considering embodiments in which hardware modules are temporarily configured (*e.g*., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware and software modules can provide information to, and receive information from, other hardware and/or software modules. Accordingly, the described hardware modules may be regarded as being communicatively coupled. Where multiple of such hardware or software modules exist contemporaneously, communications may be achieved through signal transmission (*e.g*., over appropriate circuits and buses) that connect the hardware or software modules. In embodiments in which multiple hardware modules or software are configured or instantiated at different times, communications between such hardware or software modules may be achieved, for example, through the storage and retrieval of information in memory structures to which the multiple hardware or software modules have access. For example, one hardware or software module may perform an operation and store the output of that operation in a memory device to which it is communicatively coupled. A further hardware or software module may then, at a later time, access the memory device to retrieve and process the stored output. Hardware and software modules may also initiate communications with input or output devices, and can operate on a resource (*e.g*., a collection of information).

The various operations of example methods described herein may be performed, at least partially, by one or more processors that are temporarily configured (*e.g.*, by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or processors or processor-implemented hardware modules. The performance of certain of the operations may be distributed among the one or more processors, not only residing within a single machine, but deployed across a number of machines. In some example embodiments, the processor or processors may be located in a single location (*e.g*., within a home environment, an office environment or as a server farm), while in other embodiments the processors may be distributed across a number of locations.

The one or more processors may also operate to support performance of the relevant operations in a "cloud computing" environment or as an SaaS. For example, as indicated above, at least some of the operations may be performed by a group of computers (as examples of machines including processors), these operations being accessible via a network (*e.g.,* the Internet) and via one or more appropriate interfaces (*e.g.,* APIs).

The performance of certain of the operations may be distributed among the one or more processors, not only residing within a single machine, but deployed across a number of machines. In some example embodiments, the one or more processors or processor-implemented modules may be located in a single geographic location (*e.g*., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (*e.g*., a computer memory). These algorithms or symbolic representations are examples of techniques used by those of ordinary skill in the data processing arts to convey the substance of their work to others skilled in the art. As used herein, an "algorithm" or a "routine" is a self-consistent sequence of operations or similar processing leading to a desired result. In this context, algorithms, routines and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (*e.g*., a computer) that manipulates or transforms data represented as physical (*e.g*., electronic, magnetic, or optical) quantities within one or more memories (*e.g*., volatile memory, non-volatile memory, or a combination thereof), registers, or other machine components that receive, store, transmit, or display information.

Upon reading this disclosure, those of skill in the art will appreciate still additional alternative structural and functional designs for preserving privacy during a navigation session through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein within the scope defined in the appended claims.

## Claims

1. A computer-implemented method in a mobile computing device, comprising:
receiving (402), by one or more processors, an indication of a precise origin location (302) and a precise destination location (304) via a navigation application (160) operating on the mobile computing device;
generating (404), by the one or more processors, via the navigation application, a private navigation route from the precise origin location to the precise destination location, by:
generating (406), by the one or more processors, an indication of a coarse origin region (306) including the precise origin location, and an indication of a coarse destination region (308) including the precise destination location;
transmitting (406), by the one or more processors, the indication of the coarse origin region and the indication of the coarse destination region to an external navigation server (150);
receiving (408), by the one or more processors, from the external navigation server: (i) a coarse navigation route (310) from the coarse origin region to the coarse destination region, (ii) navigation data associated with the coarse origin region, and (iii) navigation data associated with the coarse destination region; and
generating (410), by the one or more processors, the private navigation route for the user based on: (i) the coarse navigation route from the coarse origin region to the coarse destination region, (ii) the navigation data associated with the coarse origin region, and (iii) the navigation data associated with the coarse destination region; and
providing (412), by the one or more processors, the private navigation route to the user.

2. The method of claim 1, further comprising:
receiving, by the one or more processors, an indication of a request from a user to operate the navigation application in a private navigation mode in which the precise origin location and the precise destination location are not transmitted to the external navigation server,
wherein generating the private navigation route is responsive to the request from the user to operate in the private navigation mode.

3. The method of any of the preceding claims, wherein the coarse navigation route is generated, by the external navigation server, at least partially based on one or more historical navigation routes generated by the navigation server between the coarse origin region and the coarse destination region.

4. The method of any of the preceding claims, wherein providing the private navigation route to the user includes providing an indication of the coarse origin region and the coarse destination region to the user.

5. The method of any of the preceding claims, wherein generating the private navigation route for the user based on the coarse navigation route, the navigation data associated with the coarse origin region, and the navigation data associated with the coarse destination region includes:
generating a local origin route (312) from the precise origin location to a starting point of the coarse navigation route based on the navigation data associated with the coarse origin region;
generating a local destination route (314) from an ending point of the coarse navigation route to the precise destination location based on the navigation data associated with the coarse destination region; and
generating the private navigation route by connecting the local origin route, the coarse navigation route, and the local destination route as sub-sections of the private navigation route.

6. The method of claim 5, wherein providing the private navigation route to the user includes providing, to the user, an indication of one or more of the local origin route sub-section of the private navigation route or the local destination route sub-section of the private navigation route.

7. The method of any of the preceding claims, further comprising:
generating, by the one or more processors, via the navigation application, one or more of the precise origin location or the precise destination location based on a current location associated with the mobile computing device.

8. The method of any of the preceding claims, wherein generating the coarse origin region includes comparing the precise origin location to a cached place database stored locally on the mobile computing device to determine the coarse origin region, of a plurality of coarse regions stored on the cached place database, in which the precise origin location is located, and
wherein generating the coarse destination region includes comparing the precise destination location to a cached place database stored locally on the mobile computing device to determine the coarse destination region, of a plurality of coarse regions stored on the cached place database, in which the precise destination location is located.

9. The method of claim 8, wherein generating one or more of the coarse origin region or the coarse destination location includes prompting the user to provide a city or zip code associated with the respective precise origin location or precise destination location.

10. The method of any of the preceding claims, wherein generating the coarse navigation route from the coarse origin region to the coarse destination region includes generating a coarse navigation route from a first randomly selected location of the coarse origin region to a second randomly selected location of the coarse destination region.

11. The method of any of the preceding claims, wherein generating the coarse navigation route from the coarse origin region to the coarse destination region includes generating a coarse navigation route from a first center location of the coarse origin region to a second center location of the coarse destination region.

12. The method of any of the preceding claims, wherein generating the coarse navigation route from the coarse origin region to the coarse destination region includes generating a coarse navigation route from a first frequently-requested location of the coarse origin region to a second frequently-requested location of the coarse destination region.

13. A mobile computing device, comprising:
one or more processors; and
a computer-readable memory coupled to the one or more processors and storing instructions thereon that, when executed by the one or more processors, cause the mobile computing device to perform the method of any one of the preceding claims.

14. A computer-readable memory coupled to one or more processors and storing instructions thereon that, when executed by the one or more processors, cause the one or more processors to perform the method of any one of claims 1 to 12.

## Patentansprüche

1. Computerimplementiertes Verfahren in einer mobilen Rechenvorrichtung, umfassend:
Empfangen (402) einer Angabe eines genauen Ausgangsortes (302) und eines genauen Zielortes (304) durch einen oder mehrere Prozessoren über eine Navigationsanwendung (160), die auf der mobilen Rechenvorrichtung läuft;
Erzeugen (404) einer privaten Navigationsroute von dem genauen Ausgangsort zu dem genauen Zielort durch den einen oder die mehreren Prozessoren über die Navigationsanwendung durch Folgendes:
Erzeugen (406) einer Angabe einer groben Ausgangsregion (306), die den genauen Ausgangsort beinhaltet, und einer Angabe einer groben Zielregion (308), die den genauen Zielort beinhaltet, durch einen oder mehrere Prozessoren;
Übertragen (406) der Angabe der groben Ausgangsregion und der Angabe der groben Zielregion durch den einen oder die mehreren Prozessoren an einen externen Navigationsserver (150), durch einen oder mehrere Prozessoren;
Empfangen (408) von Folgendem durch den einen oder mehrere Prozessoren von dem externen Navigationsserver: (i) einer groben Navigationsroute (310) von der groben Ausgangsregion zu der groben Zielregion, (ii) Navigationsdaten, die der groben Ausgangsregion zugeordnet sind, und (iii) Navigationsdaten, die der groben Zielregion zugeordnet sind; und
Erzeugen (410) der privaten Navigationsroute für den Benutzer durch den einen oder die mehreren Prozessoren basierend auf: (i) der groben Navigationsroute von der groben Ausgangsregion zu der groben Zielregion, (ii) den Navigationsdaten, die der groben Ausgangsregion zugeordnet sind, und (iii) den Navigationsdaten, die der groben Zielregion zugeordnet sind; und
Bereitstellen (412) der privaten Navigationsroute für den Benutzer durch den einen oder die mehreren Prozessoren.

2. Verfahren nach Anspruch 1, ferner umfassend:
Empfangen einer Angabe über eine Anforderung von einem Benutzer durch den einen oder die mehreren Prozessoren, die Navigationsanwendung in einem privaten Navigationsmodus zu betreiben, in dem der genaue Ausgangsort und der genaue Zielort nicht an den externen Navigationsserver übertragen werden,
wobei das Erzeugen der privaten Navigationsroute auf die Anforderung des Benutzers, im privaten Navigationsmodus zu arbeiten, reagiert.

3. Verfahren nach einem der vorhergehenden Ansprüche, wobei die grobe Navigationsroute von dem externen Navigationsserver mindestens teilweise auf Grundlage einer oder mehrerer historischer Navigationsrouten erzeugt wird, die durch den Navigationsserver zwischen der groben Ausgangsregion und der groben Zielregion erzeugt wurden.

4. Verfahren nach einem der vorhergehenden Ansprüche, wobei das Bereitstellen der privaten Navigationsroute an den Benutzer Bereitstellen einer Angabe übe die grobe Ausgangsregion und die grobe Zielregion für den Benutzer beinhaltet.

5. Verfahren nach einem der vorhergehenden Ansprüche, wobei das Erzeugen der privaten Navigationsroute für den Benutzer auf Grundlage der groben Navigationsroute, den Navigationsdaten, die der groben Ausgangsregion zugeordnet sind, und den Navigationsdaten, die der groben Zielregion zugeordnet sind, Folgendes beinhaltet:
Erzeugen einer lokalen Ausgangsroute (312) von dem genauen Ausgangsort zu einem Startpunkt der groben Navigationsroute auf Grundlage der Navigationsdaten, die der groben Ausgangsregion zugeordnet sind;
Erstellen einer lokalen Zielroute (314) von einem Endpunkt der groben Navigationsroute bis zu dem genauen Zielort auf Grundlage der Navigationsdaten, die der groben Zielregion zugeordnet sind; und
Erzeugen der privaten Navigationsroute durch Verbinden der lokalen Ausgangsroute, der groben Navigationsroute und der lokalen Zielroute als Teilstrecken der privaten Navigationsroute.

6. Verfahren nach Anspruch 5, wobei das Bereitstellen der privaten Navigationsroute an den Benutzer Bereitstellen einer Angabe an den Benutzer über eine oder mehrere von der Teilstrecke der lokalen Ausgangsroute der privaten Navigationsroute oder der Teilstrecke der lokalen Zielroute der privaten Navigationsroute beinhaltet.

7. Verfahren nach einem der vorhergehenden Ansprüche, ferner umfassend:
Erzeugen eines oder mehrerer der genauen Ausgangsorte oder der genauen Zielorte durch den einen oder die mehreren Prozessoren über die Navigationsanwendung auf Grundlage eines aktuellen Ortes, der der mobilen Rechenvorrichtung zugeordnet ist.

8. Verfahren nach einem der vorhergehenden Ansprüche, wobei das Erzeugen der groben Ausgangsregion Vergleichen des genauen Ausgangsort mit einer lokal auf der mobilen Rechenvorrichtung gespeicherten Cache-Ortsdatenbank beinhaltet, um die grobe Ausgangsregion aus einer Vielzahl von in der Cache-Ortsdatenbank gespeicherten groben Regionen zu bestimmen, in der sich der genaue Ausgangsort befindet, und
wobei das Erzeugen der groben Ausgangsregion Vergleichen des genauen Zielortes mit einer lokal auf der mobilen Rechenvorrichtung gespeicherten Cache-Ortsdatenbank beinhaltet, um die grobe Zielregion aus einer Vielzahl von in der Cache-Ortsdatenbank gespeicherten groben Regionen zu bestimmen, in der sich der genaue Zielort befindet.

9. Verfahren nach Anspruch 8, wobei das Erzeugen eines oder mehrerer von der groben Ausgangsregion oder dem groben Zielort Auffordern des Benutzers beinhaltet, eine Stadt oder Postleitzahl bereitzustellen, die dem jeweiligen genauen Ausgangsort oder genauen Zielort zugeordnet ist.

10. Verfahren nach einem der vorhergehenden Ansprüche, wobei das Erzeugen der groben Navigationsroute von der groben Ausgangsregion zur groben Zielregion Erzeugen einer groben Navigationsroute von einem ersten zufällig ausgewählten Ort der groben Ausgangsregion zu einem zweiten zufällig ausgewählten Ort der groben Zielregion beinhaltet.

11. Verfahren nach einem der vorhergehenden Ansprüche, wobei das Erzeugen der groben Navigationsroute von der groben Ausgangsregion zur groben Zielregion Erzeugen einer groben Navigationsroute von einem ersten zentralen Ort der groben Ausgangsregion zu einem zweiten zentralen Ort der groben Zielregion beinhaltet.

12. Verfahren nach einem der vorhergehenden Ansprüche, wobei das Erzeugen der groben Navigationsroute von der groben Ausgangsregion zur groben Zielregion Erzeugen einer groben Navigationsroute von einem ersten häufig angeforderten Ort der groben Ausgangsregion zu einem zweiten häufig angeforderten Ort der groben Zielregion beinhaltet.

13. Mobile Rechenvorrichtung, umfassend:
einen oder mehrere Prozessoren; und
einen computerlesbarer Speicher, der mit dem einen oder den mehreren Prozessoren gekoppelt ist und Anweisungen speichert, die bei Ausführung durch den einen oder die mehreren Prozessoren die mobile Rechenvorrichtung veranlassen, das Verfahren nach einem der vorhergehenden Ansprüche durchzuführen.

14. Computerlesbarer Speicher, der mit einem oder mehreren Prozessoren gekoppelt ist und darauf Anweisungen speichert, die bei Ausführung durch den einen oder die mehreren Prozessoren den einen oder die mehreren Prozessoren veranlassen, das Verfahren nach einem der Ansprüche 1 bis 12 durchzuführen.

## Revendications

1. Procédé mis en œuvre par ordinateur dans un dispositif informatique mobile, comprenant :
la réception (402), par un ou plusieurs processeurs, d'une indication d'un emplacement d'origine précis (302) et d'un emplacement de destination précis (304) par le biais d'une application de navigation (160) fonctionnant sur le dispositif informatique mobile ;
la génération (404), par les un ou plusieurs processeurs, par le biais de l'application de navigation, d'un itinéraire de navigation privé de l'emplacement d'origine précis à l'emplacement de destination précis, par :
la génération (406), par les un ou plusieurs processeurs, d'une indication d'une région d'origine approximative (306) comportant l'emplacement d'origine précis, et d'une indication d'une région de destination approximative (308) comportant l'emplacement de destination précis ;
la transmission (406), par les un ou plusieurs processeurs, de l'indication de la région d'origine approximative et de l'indication de la région de destination approximative à un serveur de navigation externe (150) ;
la réception (408), par les un ou plusieurs processeurs, en provenance du serveur de navigation externe : (i) d'un itinéraire de navigation approximatif (310) de la région d'origine approximative à la région de destination approximative, (ii) de données de navigation associées à la région d'origine approximative, et (iii) de données de navigation associées à la région de destination approximative ; et
la génération (410), par les un ou plusieurs processeurs, de l'itinéraire de navigation privé pour l'utilisateur sur la base : (i) de l'itinéraire de navigation approximatif de la région d'origine approximative à la région de destination approximative, (ii) des données de navigation associées à la région d'origine approximative, et (iii) des données de navigation associées à la région de destination approximative ; et
la fourniture (412), par les un ou plusieurs processeurs, de l'itinéraire de navigation privé à l'utilisateur.

2. Procédé selon la revendication 1, comprenant également :
la réception, par les un ou plusieurs processeurs, d'une indication d'une demande d'un utilisateur pour faire fonctionner l'application de navigation dans un mode de navigation privé dans lequel l'emplacement d'origine précis et l'emplacement de destination précis ne sont pas transmis au serveur de navigation externe,
dans lequel la génération de l'itinéraire de navigation privé répond à la demande de l'utilisateur de fonctionner en mode de navigation privé.

3. Procédé selon l'une quelconque des revendications précédentes, dans lequel l'itinéraire de navigation approximatif est généré, par le serveur de navigation externe, au moins partiellement sur la base d'un ou de plusieurs itinéraires de navigation historiques générés par le serveur de navigation entre la région d'origine approximative et la région de destination approximative.

4. Procédé selon l'une quelconque des revendications précédentes, dans lequel la fourniture de l'itinéraire de navigation privé à l'utilisateur comporte la fourniture d'une indication de la région d'origine approximative et de la région de destination approximative à l'utilisateur.

5. Procédé selon l'une quelconque des revendications précédentes, dans lequel la génération de l'itinéraire de navigation privé pour l'utilisateur sur la base de l'itinéraire de navigation approximatif, des données de navigation associées à la région d'origine approximative et des données de navigation associées à la région de destination approximative comporte :
la génération d'un itinéraire d'origine local (312) de l'emplacement d'origine précis à un point de départ de l'itinéraire de navigation approximatif sur la base des données de navigation associées à la région d'origine approximative ;
la génération d'un itinéraire de destination local (314) d'un point d'arrivée de l'itinéraire de navigation approximatif à l'emplacement de destination précis sur la base des données de navigation associées à la région de destination approximative ; et
la génération de l'itinéraire de navigation privé en reliant l'itinéraire d'origine local, l'itinéraire de navigation approximatif et l'itinéraire de destination local en tant que sous-sections de l'itinéraire de navigation privé.

6. Procédé selon la revendication 5, dans lequel la fourniture de l'itinéraire de navigation privé à l'utilisateur comporte la fourniture, à l'utilisateur, d'une indication d'une ou de plusieurs de la sous-section d'itinéraire d'origine local de l'itinéraire de navigation privé ou de la sous-section d'itinéraire de destination local de l'itinéraire de navigation privé.

7. Procédé selon l'une quelconque des revendications précédentes, comprenant également :
la génération, par les un ou plusieurs processeurs, par le biais de l'application de navigation, d'un ou de plusieurs de l'emplacement d'origine précis ou de l'emplacement de destination précis sur la base d'un emplacement actuel associé au dispositif informatique mobile.

8. Procédé selon l'une quelconque des revendications précédentes, dans lequel la génération de la région d'origine approximative comporte la comparaison de l'emplacement d'origine précis à une base de données de lieux mise en cache stockée localement sur le dispositif informatique mobile afin de déterminer la région d'origine approximative, d'une pluralité de régions approximatives stockées dans la base de données de lieux mise en cache, dans laquelle se trouve l'emplacement d'origine précis, et
dans lequel la génération de la région de destination approximative comporte la comparaison de l'emplacement de destination précis à une base de données de lieux mise en cache stockée localement sur le dispositif informatique mobile pour déterminer la région de destination approximative, d'une pluralité de régions approximatives stockées dans la base de données de lieux mise en cache, dans laquelle se trouve l'emplacement de destination précis.

9. Procédé selon la revendication 8, dans lequel la génération d'un ou de plusieurs de la région d'origine approximative ou de l'emplacement de destination approximatif comporte le fait d'inviter l'utilisateur à fournir une ville ou un code postal associé à l'emplacement d'origine précis ou à l'emplacement de destination précis respectif.

10. Procédé selon l'une quelconque des revendications précédentes, dans lequel la génération de l'itinéraire de navigation approximatif de la région d'origine approximative à la région de destination approximative comporte la génération d'un itinéraire de navigation approximatif d'un premier emplacement sélectionné de manière aléatoire de la région d'origine approximative à un second emplacement sélectionné de manière aléatoire de la région de destination approximative.

11. Procédé selon l'une quelconque des revendications précédentes, dans lequel la génération de l'itinéraire de navigation approximatif de la région d'origine approximative à la région de destination approximative comporte la génération d'un itinéraire de navigation approximatif d'un premier emplacement central de la région d'origine approximative à un second emplacement central de la région de destination approximative.

12. Procédé selon l'une quelconque des revendications précédentes, dans lequel la génération de l'itinéraire de navigation approximatif de la région d'origine approximative à la région de destination approximative comporte la génération d'un itinéraire de navigation approximatif d'un premier emplacement fréquemment demandé de la région d'origine approximative à un second emplacement fréquemment demandé de la région de destination approximative.

13. Dispositif informatique mobile, comprenant :
un ou plusieurs processeurs ; et
une mémoire lisible par ordinateur couplée aux un ou plusieurs processeurs et stockant des instructions qui, lorsqu'elles sont exécutées par les un ou plusieurs processeurs, amènent le dispositif informatique mobile à réaliser le procédé selon l'une quelconque des revendications précédentes.

14. Mémoire lisible par ordinateur couplée à un ou plusieurs processeurs et stockant des instructions qui, lorsqu'elles sont exécutées par les un ou plusieurs processeurs, amènent les un ou plusieurs processeurs à réaliser le procédé selon l'une quelconque des revendications 1 à 12.
